# EUROPÄISCHE PATENTSCHRIFT

(11) **EP 2 013 605 B1**
(45) Veröffentlichungstag und Bekanntmachung des Hinweises auf die Patenterteilung: **11.05.2011**
(21) Anmeldenummer: 07722392.3
(22) Anmeldetag: 03.05.2007
(51) Int. Cl.: G01N 3/20, G01N 33/34, G01N 33/36, G01N 3/40

(54) **EINRICHTUNG ZUR BESTIMMUNG DER STEIFIGKEIT VON BIEGEWEICHEN MATERIALIEN**
DEVICE FOR DETERMINING THE STIFFNESS OF FLEXIBLE MATERIALS
DISPOSITIF DE DÉTERMINATION DE LA RIGIDITÉ DE MATÉRIAUX FLEXIBLES

(30) Priorität: 03.05.2006 DE 102006021726
(43) Veröffentlichungstag der Anmeldung: 14.01.2009
(73) Patentinhaber: Technische Universität Dresden, 01062 Dresden (DE)
(72) Erfinder: RÖDEL, Hartmut, 01189 Dresden (DE); SCHENK, Andrea, 01326 Dresden (DE); SEIF, Manal, Orman, Giza 12311 Cairo (EG); LESKE, Joachim, 01277 Dresden (DE); MILDNER, Lars, 01829 Stadt Wehlen (DE)
(74) Vertreter: Uhlemann, Henry
(86) Internationale Anmeldenummer: PCT/DE2007/000840
(87) Internationale Veröffentlichungsnummer: WO 2007/124742

(56) Entgegenhaltungen:
- WO-A-89/07267
- US-A- 2 860 510
- US-A- 4 179 941
- DE BOOS A AND TESTER DAVID: "SiroFast Fabric Assurance by Simple Testing (Subtitle: SiroFAST-A System for Fabric Objective Measurement and its Application in Fabric and Garment Manufacture)" TEXTILE AND FIBRE TECHNOLOGY, [Online] Januar 1994 (1994-01), XP002454077 ISBN: 0 643 06025 1 Gefunden im Internet: URL:http://www.csiro.au/files/files/p92v.p df> [gefunden am 2007-10-08]

## Beschreibung

Die Erfindung betrifft Einrichtungen zur Bestimmung der Steifigkeit von biegeweichen Materialien, wobei eine geführte Befestigungseinrichtung für eine Probe des biegeweichen Materials mit einer Positionsmesseinrichtung und einem Antrieb so gekoppelt ist, dass die Befestigungseinrichtung gegenüber einer Biegekante der Einrichtung für die Probe bewegbar ist.

Momentan wird die Biegesteifigkeit von textilen Flächengebilden am unkonfektionierten Material geprüft. Dieser Materialparameter kann aber nicht als objektive Größe für Simulationsrechnungen komplexer Erzeugnisse verwendet werden, da textile Produkte erst durch Konfektionierungsprozesse in ihre Gebrauchsform gebracht werden. Deshalb ist neben der genauen Kenntnis von Materialkennwerten der textilen Fläche die Quantifizierung der Wirkung von lokalen Flächenmasseschwankungen durch mehrlagige Aufbauten und/oder Nähte von fundamentaler Bedeutung.

Für die Bestimmung von lokalen Verformungsgrößen ist es nicht ausreichend, die standardisierte Biegeprüfung anzuwenden. Der Einfluss der Flächenmasseschwankung ist hiermit nicht erfassbar. Die extreme Versteifung im Nahtbereich, der im Vergleich zur restlichen Fläche deutlich kleiner ist, sowie deren Einfluss auf die angrenzenden Bereiche der textilen Fläche stellen ein lokal begrenztes Problem dar. Für eine reale Beschreibung der Biegeeigenschaften ist es notwendig, Veränderungen des Biegeverhaltens infolge von unterschiedlicher Materialverteilung über die Prüffläche quantifizieren zu können.

Eine bekannte Messtechnik ist das Biegesteifigkeitsprüfgerät nach dem Cantilever-Verfahren nach DIN 53362. Dieses Prüfgerät besitzt die Nachteile einer ungleichmäßigen Vorschubgeschwindigkeit des Biegeprüflings infolge der manuellen Bedienung, einer visuellen Bestimmung des Erreichens der Überhanglänge und eines visuellen Ablesens der Überhanglänge an einem Halbmillimetermaßstab. Die visuell zu bestimmende Überhanglänge geht in kubischer Potenz in die Berechnung der Biegesteifigkeit ein. Somit führen schon kleine Ungenauigkeiten beim Ablesen und die grobe Skalenteilung zu Fehlern bei der Berechnung. Hinzu kommt, dass der Biegeprüfling an der Vorderkante nicht linear bleibt und eine Beurteilung der Probenkante nicht möglich ist. Untersuchungen haben bestätigt, dass diese Probleme die Reproduzierbarkeit der Ergebnisse in großem Maße beeinflussen.

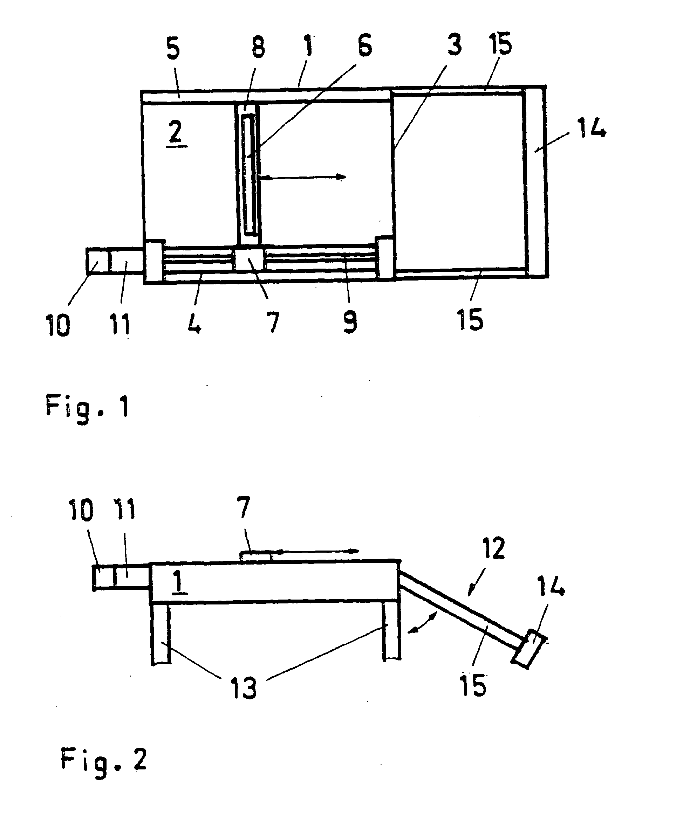

Das in dem Übersichtsartikel "SiroFAST Fabric Assurance by Simple Testing" von A. de Boos und David Tester (Januar 1994) beschriebene SiroFAST-2-Biegetestgerät (schematisch dargestellt in Fig 2.2. des Artikels ) umfaßt eine optische Meßeinrichtung zur berührungslosen Messung des Überhangs einer sich durch das Eigengewicht an einer Biegekante biegenden Probe eines Textilstoffs zur Bestimmung seiner Biegesteifigkeit, wobei der Vorschub der Probe mit einem Meßrad gemessen wird, und die optische Meßeinrichtung aus einem Lichtsender und einer an der Biegekante angeordneten Photozelle besteht.

Der im Patentanspruch 1 angegebenen Erfindung liegt die Aufgabe zugrunde, das Biegeverhalten von biegeweichen Materialien automatisch und einfach zu bestimmen.

Diese Aufgabe wird mit den im Patentanspruch 1 aufgeführten Merkmalen gelöst.

Die Einrichtungen zur Bestimmung der Steifigkeit von biegeweichen Materialien, wobei eine geführte Befestigungseinrichtung für eine Probe des biegeweichen Materials mit einer Positionsmesseinrichtung und einem Antrieb so gekoppelt ist, dass die Befestigungseinrichtung gegenüber einer Biegekante der Einrichtung für die Probe bewegbar ist, zeichnen sich insbesondere durch ihre einfache Realisierung bei automatischer Bestimmung des Biegeverhaltens aus.

Dazu ist eine optische Messanordnung zur berührungslosen Messung des Überhanges der sich durch das Eigengewicht biegenden Probe in Bewegungsrichtung der Probe nach der Biegekante der Einrichtung angeordnet, wobei die Messanordnung aus mehreren Fotodektoren an der Biegekante und mindestens einem Lichtsender besteht. Darüber hinaus sind die Positionsmesseinrichtung, der Antrieb und die optische Messanordnung mit einer Steuereinrichtung so verbunden, dass die Messung der Position wenigstens eines Bereiches des Überhanges über dessen Probenvorderkante der sich durch das Eigengewicht biegenden Probe in Bewegungsrichtung der Probe entsprechend der Positionen der Positionsmesseinrichtung und der Fotodetektoren erfolgt.

Damit ist es möglich, das Biegeverhalten entlang der Probenvorderkante auch vorteilhafterweise über die Probenbreite und damit der gesamten Probenvorderkante zu messen und somit Gradienten in der Flächenmasse bezogen auf die Biegesteifigkeit zu erfassen. Dadurch ist die Quantifizierung der Wirkung von lokalen Flächenmasseschwankungen durch Musterungen, mehrlagige Aufbauten und/oder auch Nähte effektiv möglich.

Weiterhin zeichnen sich die Einrichtungen durch eine hohe Reproduzierbarkeit der Messergebnisse aus. Die Probenbreiten können zum Beispiel 25 mm, 50 mm und 200 mm betragen. Die Vorschubgeschwindigkeit ist variabel wählbar, wobei während der Prüfung eine konstante Vorschubgeschwindigkeit gewährleistet ist.

Die angewandte optische Messanordnung zur berührungslosen Messung wenigstens eines Bereiches der Probenvorderkante erlaubt auch vorteilhafterweise eine grafische Darstellung dieses Bereiches, damit der Form dieses Bereiches der Probenvorderkante und daraus schlussfolgernd des Biegeverhaltens über wenigstens diesen Bereich.

Die Einrichtung lässt sich vorteilhafterweise komfortabel und einfach bedienen.

Damit ist die Einrichtung sowohl für die industrielle als auch wissenschaftliche Anwendung geeignet.

Vorteilhafte Ausgestaltungen der Erfindung sind in den Patentansprüchen 2 bis 11 angegeben.

Die optische Messanordnung besteht nach der Weiterbildung des Patentanspruchs 2 aus mehreren beabstandet angeordneten Lichtschranken, wobei die Lichtsender beabstandet zur Biegekante und die Fotodetektoren an der Biegekante angeordnet sind, so dass die Position und daraus folgernd die Form der Probenvorderkante des Überhanges in Bewegungsrichtung der Probe bereichsweise entsprechend der Positionen der Lichtsender und der Fotodetektoren erfolgt. Während der Bewegung der Probe und damit des Überhanges biegt sich dieser entsprechend seiner Steifigkeit und auf Grund seines Gewichtes. Dabei werden die Lichtschranken durch die Probenvorderkante des Überhanges unterbrochen, so dass elektrische Signale in Abhängigkeit der Länge des Überhanges gewonnen werden. Diese Signale sind äquivalent der Form der Probenvorderkante des Überhanges. Die Abstände der Lichtschranken können vorteilhafterweise ein- und feststellbar sein.

Die optische Messanordnung besteht nach der Weiterbildung des Patentanspruchs 3 aus einer Lichtschranke, wobei wenigstens ein Lichtsender mit einer im Strahlengang nachgeordneten Scanneroptik beabstandet zur Biegekante und mehrere Fotodektoren an der Biegekante angeordnet sind, so dass die Position und daraus folgernd die Form der Probenvorderkante des Überhanges in Bewegungsrichtung der Probe entsprechend der Positionen der Fotodetektoren erfolgt. Mit der Scanneroptik wird der Lichtstrahl parallel zur Biegekante geführt. Eine derartige Scanneroptik ist beispielsweise ein Schwenkspiegel oder ein rotierender Polygonspiegel. Der Überhang unterbricht die optische Verbindung zwischen Scanneroptik und Fotodektor über die Zeit der wiederholenden durch die Bewegung der Scanneroptik bestimmten Verbindung hinaus, so dass die Position der Probenvorderkante des Überhanges in Abhängigkeit deren Länge bestimmt werden kann.

Eine ähnliche Ermittlung der Position der Probenvorderkante des Überhanges erfolgt durch die Weiterbildung des Patentanspruchs 4, wobei die optische Messanordnung aus einer Lichtschranke besteht, dabei mindestens ein Lichtsender über einen damit gekoppelten Antriebsmechanismus parallel zur Biegekante der Einrichtung bewegbar ist und mehrere Fotodetektoren an der Biegekante angeordnet sind, so dass die Position und daraus folgernd die Form der Probenvorderkante des Überhanges in Bewegungsrichtung der Probe entsprechend der Positionen der Fotodetektoren erfolgt. Dabei wird der Lichtsender selbst verfahren.

Beabstandet zu dem Überhang der Probe ist nach der Weiterbildung des Patentanspruchs 5 eine Bildaufnahmeeinrichtung zur Aufnahme der Bereiche der auf die Probe auftreffenden Lichtstrahlen des wenigstens einen Lichtsenders angeordnet. Weiterhin ist die Bildaufnahmeeinrichtung mit einer Bildauswerteeinrichtung so zusammengeschaltet, dass die Position der Bereiche der Probe mit den auftreffenden Lichtstrahlen bestimmt wird.

Die optische Messanordnung ist in einem weiteren, nicht beanspruchten Beispiel eine beabstandet zur Biegekante der Einrichtung angeordnete Bildaufnahmeeinrichiung zur Aufnahme wenigstens der korrespondierend zur Biegekante verlaufenden Probenvorderkante, wobei die Bildaufnahmeeinrichtung mit einer Bildauswerteeinrichtung so zusammengeschaltet ist, dass die Form dieser Probenvorderkante als aneinandergereihte digital gewandelte Bildpunkte gespeichert und/oder dargestellt wird. Dabei kann die vollständige Geschichte der Form der Probenvorderkante des Überhanges in Abhängigkeit der Überhanglänge erfasst werden.

Nach den Weiterbildungen des Patentanspruchs 6 sind die Befestigungseinrichtung an einem geführten Schlitten oder Laufwagen angeordnet, der Antrieb als rotatorisch wirkender Antrieb entweder mit einer Antriebsspindel gekoppelt, wobei die Antriebsspindel in eine Gewindemutter des Schlittens oder Laufwagens eingreift, oder mit einer Rolle/einem Rad eines Zugmitteltriebs gekoppelt, wobei der Schlitten oder Laufwagen mit dem Zugmittel verbunden ist, und die Positionsmesseinrichtung ein direkt oder indirekt messendes System. Damit ist ein einfaches geführtes Verfahren des Schlittens oder Laufwagens möglich. Bei der direkten Messung ist die Positionsmesseinrichrung unmittelbar am Schlitten oder Laufwagen angebracht. Bei der indirekten Messung übertragen Zwischenglieder die Lage- oder Streckenänderung auf ein rotatorisch wirkendes messendes System. Zwischenglieder sind die Antriebsspindel oder Zahnstange und Ritzel. Die indirekte Messung ist konstruktiv einfacher und damit ökonomischer als die direkte Messung.

Das direkt messende System kann vorteilhafterweise aus einem Aufnehmer am Schlitten oder Laufwagen und einem Maßstab an einem gegenüber dem Schlitten oder Laufwagen festem Bestandteil der Einrichtung bestehen.

Das indirekt messende System ist zum Beispiel ein in eine Zahnstange an einem festen Bestandteil der Einrichtung eingreifendes und mit einem Drehaufnehmer gekoppeltes Ritzel entweder am Schlitten oder am Laufwagen oder ein an die Antriebsspindel oder den Antrieb gekoppelter Drehgeber.

Nach der Weiterbildung des Patentanspruchs 7 ist die Befestigungseinrichtung an einem geführten Schlitten oder Laufwagen angeordnet, stellt der Antrieb ein Linearantrieb mit einem Linearmotor dar und ist die Positionsmesseinrichtung ein direkt oder indirekt messendes System. In den Linearmotor kann leicht eine Positionsmesseinrichtung integriert sein. Über bekannte Abstände der Schritte kann leicht die Position des Schlittens oder des Laufwagens bestimmt werden.

Die Befestigungseinrichtung ist nach der Weiterbildung des Patentanspruchs 8 vorteilhafterweise gelenkig am Schlitten oder Laufwagen angeordnet. Dadurch kann die Probe einfach in einem fest bestimmten Abstand des Schlittens oder Laufwagens gegenüber der Biegekante befestigt werden.

Befestigungseinrichtung ist nach der Weiterbildung des Patentanspruchs 9 an einer Platte mit einer Vorschubebene für die Probe angeordnet, wobei die Biegekante eine rechtwinklig zur Geradführung angeordnete Kante der Vorschubebene ist, und die Vorschubebene und die optische Messanordnung einen Winkel größer 90° und kleiner 180° einschließen. Die optische Messanordnung stellt damit eine geneigte Ebene zur Vorschubebene dar. Vorteilhafterweise können auch Proben mit sehr geringer Steifigkeit leicht untersucht werden.

Vorteilhafterweise sind die Platte mit der Vorsenubebene und die optische Messanordnung in Fortführung und nach der Weiterbildung des Patentanspruchs 10 gelenkig miteinander so verbunden, dass der Winkel zwischen der Vorschubebene und der optischen Messanordnung ein- und in dieser Position feststellbar ist.

Die Probe aus einem biegeweichen Material ist nach der Weiterbildung des Patentanspruchs 11 ein Textil, ein Leder, ein Papier, eine Folie oder ein beschichtetes oder kaschiertes Material mit oder ohne einer Naht, so dass bei Vorhandensein einer Naht die Nahtsteifigkeit sowie deren Einfluss auf angrenzende Bereiche der Probe berücksichtigt wird. Durch die Einrichtung können auch die Steifigkeiten an die Naht angrenzender Flächen bestimmt werden. Dadurch kann die Biegesteifigkeit als Funktion des Nahtabstandes ermittelt werden. Textilien sind dazu insbesondere Gewebe, Maschenware, Gelege, oder kaschierte und laminierte Kombinationen wie zum Beispiel Gewebe mit Schaumstoffschicht mit oder ohne einer Naht.

Ein Ausführungsbeispiel der Erfindung ist in den Zeichnungen jeweils prinzipiell dargestellt und wird im folgenden näher beschrieben.

Es zeigen:
Fig. 1 eine Einrichtung zur Bestimmung der Steifigkeit von biegeweichenMaterialien in einer Draufsicht und
Fig. 2 die Einrichtung in einer Seitenansicht.

Eine Einrichtung zur Bestimmung der Steifigkeit von biegeweichen Materialien besteht im Wesentlichen aus einer geführten Befestigungseinrichtung 6 für eine Probe aus einem biegeweichen Material mit einer Positionsmesseinrichtung und einem Antrieb 11, einer Vorschubebene 2 mit einer Biegekante 3, einer optischen Messanordnung zur berührungslosen Messung der Position und daraus folgernd der Form der Probenvorderkante oder des Bereiches des Überhanges der sich durch das Eigengewicht biegenden Probe nach der Biegekante 3 der Einrichtung und einer mit der Positionsmesseinrichtung, dem Antrieb 11 und der optischen Messanordnung verbundenen Steuereinrichtung.

Die Fig 1. zeigt eine Einrichtung zur Bestimmung der Steifigkeit von biegeweichen Materialien in einer prinzipiellen Draufsicht.

Die Einrichtung zur Bestimmung der Steifigkeit von biegeweichen Materialien weist dazu eine Vorschubebene 2 und eine geneigte Ebene 12 als eine Strahlebene auf.

Die Vorschubebene 2 ist vorzugsweise eine Oberfläche einer Platte 1, die weiterhin mit einem Gestell 13 versehen ist, so dass ein Tisch realisiert ist. Die Platte 1 und damit die Vorschubebene 2 besitzt zwei beabstandet zueinander angeordnete Geradführungen 4, 5 für die Befestigungseinrichtung 6 der Probe, die sich in einer Fahrtraverse 8 befindet. Die Befestigungseinrichtung 6 für die Probe ist vorzugsweise eine bekannte lösbare Klemmvorrichtung.

Eine erste Geradführung 4 besitzt einen Laufwagen 7 mit der Fahrtraverse 8, für die Befestigungseinrichtung 6 der Probe, während die zweite Geradführung 5 als Gleitschiene für die Fahrtraverse 8 ausgebildet ist. Der Laufwagen 7 und die Gleitschiene auf der gegenüberliegenden Seite gewährleisten eine Linearführung der Fahrtraverse 8 mit der Befestigungseinrichtung 6 parallel zur Biegekante 3. Der Laufwagen 7 weist eine Gewindemutter auf, in die eine Antriebsspindel 9 eingreift. Die Antriebsspindel 9 ist drehbar gelagert und mit einem rotatorisch wirkenden Antrieb 11 gekoppelt. Die Positionsmesseinrichtung für den Laufwagen 7 an der Vorschubebene 2 ist ein indirekt messendes System. Dazu ist an die Antriebsspindel 9 ein Drehgeber 10 gekoppelt. Der Drehgeber 10 ist ein bekanntes digital-inkrementales Messsystem mit einer Rasterscheibe. Dadurch ist eine Unterteilung des Weges gegeben. Die Messung des Weges erfolgt über das Prinzip der Kettenmaßbildung, wobei mittels einer Abtasteinrichtung bei der Relativbewegung gegenüber dem Raster die sogenannten Zählimpulse geliefert werden, die in einem Zähler aufsummiert werden. Unter Einbeziehung der Steigung des Gewindes der Antriebsspindel 9 ist der Weg und die Position des Laufwagens 7 bestimmbar.

An der Vorschubebene 2 für die Probe ist die Biegekante 3 angeordnet, wobei die Biegekante 3 eine rechtwinklig zu den Geradführungen 4, 5 angeordnete Kante der Platte 1 ist.

Die Vorschubebene 2 und die optische Messanordnung, die die geneigte Ebene 12 darstellt, sind winklig zueinander angeordnet und schließen einen Winkel größer 90° und kleiner 180° ein. Dazu sind vorzugsweise die Platte 1 mit der Vorschubebene 2 und die optische Messanordnung gelenkig miteinander so verbunden, dass der Winkel zwischen der Vorschubebene 2 und der optischen Messanordnung ein und in dieser Position feststellbar ist.

Die optische Messanordnung besteht aus mehreren beabstandet angeordneten Lichtschranken, wobei die Lichtsender beabstandet zur Biegekante 3 und die Fotodetektoren an der Biegekante 3 angeordnet sind. Die Lichtsender sind bekannte Laser, insbesondere sogenannte Laserpointer, die sich in einer Haltevorrichtung 14 befinden. Die Haltevorrichtung 14 ist über zwei beabstandet zueinander angeordnete Stege 15 gelenkig mit der Platte 1 verbunden. Die Biegekante 3, die Stege 15 und die Haltevorrichtung 14 begrenzen die geneigte Ebene 12. Die Fotodetektoren der Lichtschranken sind bekannte Fototransistoren. Damit wird die Position und daraus folgernd die Form der Probenvorderkante des Überhanges in Bewegungsrichtung der Probe bereichsweise entsprechend der Positionen der Lichtsender und der Fotodetektoren erfasst.

Die Laserpointer sind zum Beispiel in einem Raster von 12,5 mm angeordnet. Bei einer parallelen Platzierung von 17 Laserpointer und einer gleichen Zahl von Fotodetektoren können bei einer Probenbreite von 25 mm 3 Messwerte erfasst werden. Bei einer Probenbreite von 50 mm ist die Erfassung von 5 Messwerten und bei einer Probenbreite von 200 mm die Erfassung von 17 Messwerten gegeben. Die Fototransistoren sind kurz unter der Biegekante 3 positioniert. Diese sind konstruktiv so gestaltet, dass mittels einer definierten Fase eine exakte Winkeleinstellung zur Messwertaufnahme möglich ist. Die Auswertung des elektronischen Signals der Empfänger geschieht mittels einer Komparatorschaltung mit Hysterese der Steuereinrichtung um ein "flackern" in den Grenzbereichen zu verhindern. Die Signale werden direkt als Binärwort ausgelesen. Wenn der Probekörper sich unter seinem Eigengewicht bei zunehmender Überhanglänge biegt, werden die Lichtstrahlen der Laserpointer einzeln unterbrochen, so dass über die Breite des Prüfkörpers 17 Einzelwerte der Überhanglänge bestimmt und damit 17 Einzelwerte der Biegesteifigkeit berechnet werden.

Die Positionsmesseinrichtung, der Antrieb 11 und die optische Messanordnung sind mit der Steuereinrichtung verbunden. Damit erfolgt die Messung der Position einer Probenvorderkante oder eines Bereiches des Überhanges der sich durch das Eigengewicht biegenden Probe in Abhängigkeit der Position des Laufwagens 7 mit der Befestigungseinrichtung 6 für die Probe. Die Steuereinrichtung ist vorzugsweise ein Bestandteil eines Datenverarbeitungssystems zum Beispiel in Form eines Computers.

Die Probe aus dem biegeweichen Material selbst ist ein Textil, ein Leder, ein Papier, eine Folie oder ein beschichtetes oder kaschiertes Material mit oder ohne einer Naht ist, so dass bei Vorhandensein einer Naht die Nahtsteifigkeit sowie deren Einfluss auf angrenzende Bereiche der Probe berücksichtigt wird.

In einer ersten Ausführungsform des Ausführungsbeispiels besteht die optische Messanordnung aus einer Lichtschranke, wobei ein Lichtsender mit einer im Strahlengang nachgeordneter Scanneroptik beabstandet zur Biegekante 3 und mehrere Fotodetektoren an der Biegekante 3 angeordnet sind, so dass die Position und daraus folgernd die Form der Kante des Überhanges in Bewegungsrichtung der Probe entsprechend der Positionen der Fotodetektoren erfolgt. Die Scanneroptik ist dazu entweder ein angetriebener Schwenkspiegel oder ein rotierender Polygonspiegel.

In einer zweiten Ausführungsform besteht die optische Messanordnung aus einer Lichtschranke, wobei ein Lichtsender über einen damit gekoppelten Antriebsmechanismus parallel zur Biegekante 3 der Einrichtung bewegbar ist und mehrere Fotodetektoren an der Biegekante 3 angeordnet sind, so dass die Position und daraus folgernd die Form der Kante des Überhanges in Bewegungsrichtung der Probe entsprechend der Positionen der Fotodetektoren erfolgt.

In einem nicht unter die Ansprüche fallenden Beispiel ist die optische Messanordnung eine beabstandet zur Biegekante 3 der Einrichtung angeordnete Bildaufnahmeeinrichtung zur Aufnahme wenigstens der korrespondierend zur Biegekante 3 verlaufenden Kante der Probe. Die Bildaufnahmeeinrichtung ist mit einer Bildauswerteeinrichtung so zusammengeschaltet, dass die Form dieser Probenvorderkante als aneinander gereihte digital gewandelte Bildpunkte gespeichert und/oder dargestellt wird. Die Bildaufnahmeeinrichtung ist eine bekannte Digitalkamera. Die Bildauswerteeinrichtung ist vorteilhafterweise ein Bestandteil des Computers.

In einer weiteren Ausführungsform ist beabstandet zu dem Überhang der Probe eine Bildaufnahmeeinrichtung zur Aufnahme der Bereiche, der auf die Probe auftreffenden Lichtstrahlen des wenigstens einen Lichtsenders angeordnet. Die Bildaufnahmeeinrichtung in Form einer Digitalkamera ist mit einer im Datenverarbeitungssystem enthaltenen Bildauswerteeinrichtung so zusammengeschaltet, dass die Position der Bereiche der Probe mit den auftreffenden Lichtstrahlen bestimmt wird.

### Bezugszeichenliste

- 1: Platte
- 2: Vorschubebene
- 3: Biegekante
- 4: erste Geradführung
- 5: zweite Geradführung
- 6: Befestigungseinrichtung
- 7: Laufwagen
- 8: Fahrtraverse
- 9: Antriebsspindel
- 10: Drehgeber
- 11: Antrieb
- 12: geneigte Ebene
- 13: Gestell
- 14: Haltevorrichtung
- 15: Steg

## Patentansprüche

1. Einrichtung zur Bestimmung der Steifigkeit von biegeweichen Materialien, wobei eine geführte Befestigungseinrichtung für eine Probe des biegeweichen Materials mit einer Positionsmesseinrichtung und einem Antrieb so gekoppelt ist, dass die Befestigungseinrichtung gegenüber einer Biegekante der Einrichtung für die Probe bewegbar ist, und wobei eine optische Messanordnung zur berührungslosen Messung des Überhanges der sich durch das Eigengewich biegenden Probe nach der Biegekante (3) der Einrichtung angeordnet ist, **dadurch gekennzeichnet, daß** die Messanordnung aus mehreren Fotodektoren an der Biegekante und mindestens einem Lichtsender besteht, und dass die Positionsmesseinrichtung, der Antrieb (11) und die optische Messanordnung mit einer Steuereinrichtung so verbunden sind, dass die Messung der Position wenigstens eines Bereiches des Überhanges über dessen Probenvorderkante der sich durch das Eigengewicht biegenden Probe in Bewegungsrichtung der Probe entsprechend der Positionen der Positionsmesseinrichtung und der Fotodetektoren erfolgt.

2. Einrichtung nach Patentanspruch 1, **dadurch gekennzeichnet, dass** die optische Messanordnung aus mehreren beabstandet angeordneten Lichtschranken besteht, wobei die Lichtsender beabstandet zur Biegekante (3) und die Fotodetektoren an der Biegekante (3) angeordnet sind, so dass die Messung der Position und daraus folgernd die Form der Probenvorderkante des Überhanges in Bewegungsrichtung der Probe bereichsweise entsprechend der Positionen der Lichtsender und der Fotodetektoren über die Probenbreite erfolgt.

3. Einrichtung nach Patentanspruch 1, **dadurch gekennzeichnet, dass** die optische Messanordnung aus einer Lichtschranke besteht, wobei wenigstens ein Lichtsender mit einer im Strahlengang nachgeordneter Scanneroptik beabstandet zur Biegekante (3) und mehrere Fotodetektoren an der Biegekante (3) angeordnet sind, so dass die Messung der Position und daraus folgernd die Form der Probenvorderkante des Überhanges in Bewegungsrichtung der Probe entsprechend der Positionen der Fotodetektoren über die Probenbreite erfolgt.

4. Einrichtung nach Patentanspruch 1, **dadurch gekennzeichnet, dass** die optische Messanordnung aus einer Lichtschranke besteht, wobei mindestens ein Lichtsender über einen damit gekoppelten Antriebsmechanismus parallel zur Biegekante (3) der Einrichtung bewegbar ist und mehrere Fotodetektoren an der Biegekante (3) angeordnet sind, so dass die Messung der Position und daraus folgernd die Form der Probenvorderkante des Überhanges in Bewegungsrichtung der Probe entsprechend der Positionen der Fotodetektoren über die Probenbreite erfolgt.

5. Einrichtung nach Patentanspruch 1 und wenigstens einem der Patentansprüche 2 bis 4, **dadurch gekennzeichnet, dass** beabstandet zu dem Überhang der Probe eine Bildaufnahmeeinrichtung zur Aufnahme der Bereiche, der auf die Probe auftreffenden Lichtstrahlen des wenigstens einen Lichtsenders angeordnet ist und dass die Bildaufiiahmeeinrichtung mit einer Bildauswerteeinrichtung so zusammengeschaltet ist, dass die Position der Bereiche der Probe und deren Probenvorderkante mit den auftreffenden Lichtstrahlen bestimmt wird.

6. Einrichtung nach Patentanspruch 1, **dadurch gekennzeichnet, dass** die Befestigungseinrichtung (6) an einem geführten Schlitten oder Laufwagen (7) angeordnet ist, dass der Antrieb als rotatorisch wirkender Antrieb (11) entweder mit einer Antriebsspindel (9) gekoppelt ist, wobei die Antriebsspindel (9) in eine Gewindemutter des Schlittens oder Laufwagens (7) eingreift, oder mit einer Rolle/einem Rad eines Zugmitteltriebs gekoppelt ist, wobei der Schlitten oder Laufwagen (7) mit dem Zugmittel verbunden ist, und dass die Positionsmesseinrichtung ein direkt oder indirekt messendes System ist.

7. Einrichtung nach Patentanspruch 1, **dadurch gekennzeichnet, dass** die Befestigungseinrichtung (6) an einem geführten Schlitten oder Laufwagen (7) angeordnet ist, dass der Antrieb als ein Linearantrieb mit einem Linearmotor ist und dass die Positionsmesseinrichtung ein direkt oder indirekt messendes System ist.

8. Einrichtung nach Patentanspruch 6 oder 7, **dadurch gekennzeichnet, dass** die Befestigungseinrichtung (6) gelenkig am Schlitten oder Laufwagen (7) angeordnet ist.

9. Einrichtung nach Patentanspruch 1, **dadurch gekennzeichnet, dass** wenigstens eine Geradführung der Befestigungseinrichtung (6) an einer Platte (1) mit einer Vorschubebene (2) für die Probe angeordnet ist, wobei die Biegekante (3) eine rechtwinklig zur Geradführung angeordnete Kante der Vorschubebene (2) ist, und dass die Vorschubebene (2) und die optische Messanordnung einen Winkel größer 90° und kleiner 180° einschließen.

10. Einrichtung nach Patentanspruch 9, **Dadurch gekennzeichnet, dass** die Platte (1) mit der Vorschubebene (2) und die optische Messanordnung gelenkig miteinander so verbunden sind, dass der Winkel zwischen der Vorschubebene (2) und der optischen Messanordnung ein- und in dieser Position feststellbar ist.

11. Einrichtung nach Patentanspruch 1, **dadurch gekennzeichnet, dass** die Probe Textil, Gelege, Vlies, Leder, Papier oder kaschierte und laminierte Kombinationen davon mit oder ohne einer Naht ist, so dass bei Vorhandensein einer Naht die Nahtsteifigkeit sowie deren Einfluss auf angrenzende Bereiche der Probe berücksichtigt wird.

## Claims

1. Device for determining the stiffness of flexible materials, wherein a guided mounting device for a specimen of the flexible material is coupled with a position measuring device and a drive such that the mounting device is movable relative to a bending edge of the device for the specimen and wherein an optical measuring arrangement for the noncontacting measurement of the overhang of the specimen which bends due to its own weight is located after the bending edge (3) of the device **characterized by** that the measuring arrangement includes several photodetectors at the bending edge and at least one light emitter, and that the position measuring device, the drive (11) and the optical measuring arrangement are connected to a control device such that the measurement of the position of at least one region of the overhang over the front edge of that region of the specimen which bends due to its own weight in direction of movement of the specimen is made according to the positions of the position measuring device and the photodetectors.

2. Device to claim 1 **characterized by** that the optical measuring arrangement includes several photoelectric beams arranged distanced from each other with the light emitters arranged distanced to the bending edge (3) and the photodetectors arranged at the bending edge (3) so that the measurement of the position and concluding therefrom the shape of the specimen's front edge of the overhang in direction of movement of the specimen is carried out in regions according to the positions of the light emitters and the photodetectors over the width of the specimen.

3. Device to claim 1 **characterized by** that the optical measuring arrangement includes a photoelectric beam with at least one light emitter with a scanner optical system which is arranged subsequently in the light path distanced to the bending edge (3) and several photodetectors arranged at the bending edge (3) so that the measurement of the position and concluding therefrom the shape of the specimen's front edge of the overhang in direction of movement of the specimen is carried out according to the positions of the photodetectors over the width of the specimen.

4. Device to claim 1 **characterized by** that the optical measuring arrangement includes a photoelectric beam with at least one light emitter being movable parallel to the bending edge (3) of the device through a drive mechanism coupled to the light emitter and several photodetectors arranged at the bending edge (3) so that the measurement of the position and concluding therefrom the shape of the specimen's front edge of the overhang in direction of movement of the specimen is carried out according to the positions of the photodetectors over the width of the specimen.

5. Device to claim 1 and at least one of the claims 2 to 4 **characterized by** that a picture taking unit for recording the regions of the light beams, that impinge the specimen, of the at least one light emitter is arranged distanced to the overhang of the specimen and that the picture taking unit is coupled to a picture evaluating unit such that the position of the regions of the specimen and it's front edge is determined using the incident light beams.

6. Device to claim 1 **characterized by** that the mounting device (6) is positioned at a guided slide or carriage (7), that the drive as a rotatively functioning drive (11) is coupled either to a drive spindle (9) with the drive spindle (9) engaging with a threaded nut of the slide or carriage (7), or is coupled to a roller/a wheel of a traction drive with the slide or carriage (7) connected to the traction means, and that the position measuring device is a directly or indirectly measuring system.

7. Device to claim 1 **characterized by** that the mounting device (6) is positioned at a guided slide or carriage (7), that the drive is a linear drive with a linear motor and the position measuring device is a directly or indirectly measuring system.

8. Device to claim 6 or 7 **characterized by** that the mounting device (6) is pivotically mounted to the slide or carriage (7).

9. Device to claim 1 **characterized by** that at least one linear bearing of the mounting device (6) is arranged at a plate (1) with a feeding plane (2) for the specimen, whereby the bending edge (3) is an edge arranged orthogonally to the linear bearing, of the feeding plane (2), and that the feeding plane (2) and the optical measuring arrangement include an angle larger than 90° and smaller than 180°.

10. Device to claim 9 **characterized by** that the plate (1) with the feeding plane (2) and the optical measuring arrangement are pivotically connected to each other such that the angle between the feeding plane (2) and the optical measuring arrangement is adjustable to a position and fixable in this position.

11. Device to claim 1 **characterized by** that the specimen is textile, non-woven lattice, fleece, leather, paper or coated or laminated combinations thereof with or without a seam so that if there is a seam the seam stiffness and the influence thereof onto neighboring regions of the specimen is taken into consideration.

## Revendications

1. Dispositif de détermination de la rigidité de matériaux flexibles, dans lequel un dispositif de fixation guidé pour un échantillon du matériau flexible est couplé à un dispositif de mesure de position et à un entraînement de telle manière que le dispositif de fixation soit mobile par rapport à un bord de pliage pour l'échantillon, et un dispositif de mesure optique pour la mesure sans contact du débord de l'échantillon se pliant du fait de son poids propre est disposé après le bord de pliage (3), **caractérisé en ce que** le dispositif de mesure est composé de plusieurs photodétecteurs sur le bord de pliage et d'au moins un émetteur de lumière, et que le dispositif de mesure de position, l'entraînement (11) et le dispositif de mesure optique sont reliés à un dispositif de commande de telle manière que la mesure de la position d'au moins une zone du débord ait lieu par l'intermédiaire du bord avant de l'échantillon qui se plie du fait de son poids propre dans la direction de déplacement de l'échantillon en fonction des positions du dispositif de mesure de position et des photodétecteurs.

2. Dispositif selon la revendication 1, **caractérisé en ce que** le dispositif de mesure optique est composé de plusieurs barrières lumineuses espacées, les émetteurs de lumière étant disposés à distance du bord de pliage (3) et les photodétecteurs sur le bord de pliage (3), de telle manière que la mesure de la position et, par conséquent, de la forme du bord avant d'échantillon du débord dans la direction de déplacement de l'échantillon ait lieu sur la largeur de l'échantillon, par secteurs en fonction des positions des émetteurs de lumière et des photodétecteurs.

3. Dispositif selon la revendication 1, **caractérisé en ce que** le dispositif de mesure optique est composé d'une barrière lumineuse, au moins un émetteur de lumière avec une optique de balayage placée en aval dans le chemin optique étant disposée à distance du bord de pliage (3) et plusieurs photodétecteurs sur le bord de pliage (3), de telle manière que la mesure de la position et, par conséquent, de la forme du bord avant d'échantillon du débord dans la direction de déplacement de l'échantillon ait lieu sur la largeur de l'échantillon en fonction des positions des photodétecteurs.

4. Dispositif selon la revendication 1, **caractérisé en ce que** le dispositif de mesure optique est composé d'une barrière lumineuse, au moins un émetteur de lumière étant mobile parallèlement au bord de pliage (3) du dispositif par l'intermédiaire d'un mécanisme d'entraînement couplé avec lui et plusieurs photodétecteurs étant disposés sur le bord de pliage (3), de telle manière que la mesure de la position et, par conséquent, de la forme du bord avant d'échantillon du débord dans la direction de déplacement de l'échantillon ait lieu sur la largeur de l'échantillon en fonction des positions des photodétecteurs.

5. Dispositif selon la revendication 1 et au moins une des revendications 2 à 4, **caractérisé en ce qu'**un dispositif de prise de vues pour obtenir l'image des zones des faisceaux lumineux dudit au moins un émetteur de lumière arrivant sur l'échantillon est disposé à distance du débord de l'échantillon et que le dispositif de prise de vues est interconnecté avec un disposition d'évaluation d'images de telle manière que la position des zones de l'échantillon et de son bord avant d'échantillon soit déterminée avec les faisceaux lumineux incidents.

6. Dispositif selon la revendication 1, **caractérisé en ce que** le dispositif de fixation (6) est disposé sur un traîneau ou chariot (7) guidé, que l'entraînement est couplé en tant qu'entraînement rotatif (11) soit à une broche d'entraînement (9), la broche d'entraînement (9) s'engageant dans un écrou fileté du traîneau ou du chariot (7), soit à un galet/une roue d'un mécanisme à moyen de traction, le traîneau ou le chariot (7) étant relié au moyen de traction, et que le dispositif de mesure de position est un système à mesure directe ou indirecte.

7. Dispositif selon la revendication 1, **caractérisé en ce que** le dispositif de fixation (6) est disposé sur un traîneau ou chariot (7) guidé, que l'entraînement est un entraînement linéaire avec un moteur linéaire et que le dispositif de mesure de position est un système à mesure directe ou indirecte.

8. Dispositif selon la revendication 6 ou 7, **caractérisé en ce que** le dispositif de fixation (6) est disposé de manière articulée sur le traîneau ou chariot (7).

9. Dispositif selon la revendication 1, **caractérisé en ce qu'**au moins un guide rectiligne du dispositif de fixation (6) est disposé sur une plaque (1) avec un plan d'avance (2) pour l'échantillon, le bord de pliage (3) étant un bord du plan d'avance (2) disposé perpendiculairement au guide rectiligne, et que le plan d'avance (2) et le dispositif de mesure optique font un angle supérieur à 90° et inférieur à 180°.

10. Dispositif selon la revendication 9, **caractérisé en ce que** la plaque (1) avec le plan d'avance (2) et le dispositif de mesure optique sont reliés entre eux de manière articulée de telle manière que l'angle entre le plan d'avance (2) et le dispositif de mesure optique soit réglable et immobilisable dans cette position.

11. Dispositif selon la revendication 1, **caractérisé en ce que** l'échantillon est du textile, du non-tissé, une nappe de fibres, du cuir, du papier ou des combinaisons doublées et laminées de ceux-ci avec ou sans une couture, de telle manière qu'en cas de présence d'une couture, la rigidité de la couture ainsi que son influence sur les zones adjacentes de l'échantillon soient prises en compte.
